(19) Europäisches Patentamt
European Patent Office
Office européen des brevets

(11) **EP 3 526 593 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **17788180.2**

(22) Anmeldetag: **13.10.2017**

(51) Int Cl.:
*G01N 27/30* [(2006.01)]   *G01N 27/333* [(2006.01)]
*G01N 27/36* [(2006.01)]

(86) Internationale Anmeldenummer:
**PCT/EP2017/076165**

(87) Internationale Veröffentlichungsnummer:
**WO 2018/069492 (19.04.2018 Gazette 2018/16)**

(54) **MESSELEMENT FÜR EINE IONENSENSITIVE FESTKONTAKT-ELEKTRODE UND IONENSENSITIVE FESTKONTAKT-ELEKTRODE**

MEASURING ELEMENT FOR AN ION-SENSITIVE SOLID CONTACT ELECTRODE AND ION-SENSITIVE SOLID CONTACT ELECTRODE

ÉLÉMENT DE MESURE POUR UNE ÉLECTRODE DE CONTACT FIXE SENSIBLE AUX IONS ET ÉLECTRODE DE CONTACT FIXE SENSIBLE AUX IONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2016 EP 16193653**

(43) Veröffentlichungstag der Anmeldung:
**21.08.2019 Patentblatt 2019/34**

(73) Patentinhaber: **Mettler-Toledo GmbH
8606 Greifensee (CH)**

(72) Erfinder:
• **LIMON PETERSEN, Juan
8906 Bonstetten (CH)**
• **RUTZ, Andreas
8052 Zürich (CH)**

(74) Vertreter: **Mettler-Toledo
IP Department
Im Langacher 44
8606 Greifensee (CH)**

(56) Entgegenhaltungen:
EP-A1- 0 382 846   DE-A1- 2 538 739
DE-A1- 3 727 485

**Beschreibung**

Die Erfindung betrifft ein Messelement für eine ionensensitive Festkontakt-Elektrode zur Messung von Ionenaktivitäten, sowie eine ionensensitive Festkontakt-Elektrode mit einem Messelement, insbesondere eine pH-Festkontakt-Elektrode.

Im Labor sowie auch in Prozessanlagen werden zur Messung von Ionenaktivitäten und insbesondere des pH-Werts bevorzugt Glaselektroden eingesetzt, welche eine dünne ionensensitive Glasmembran aufweisen. Die ionensensitive Glasmembran ist meist als dünnwandiger Abschluss an einen Elektrodenschaft aus isolierendem Glas angeschmolzen, wobei die für den Elektrodenschaft und die Glasmembran verwendeten Gläser ähnliche Ausdehnungskoeffizienten aufweisen.

Derartige ionensensitive Glaselektroden können als Messelektrode zusammen mit einer Referenzelektrode als elektrochemischer Sensor eingesetzt werden, wobei die Messelektrode und Referenzelektrode als separate Elemente oder in einem gemeinsamen Gehäuse als sogenannte Kombinationselektrode ausgebildet sein können.

Im Betrieb bzw. während einer Messung befindet sich die äussere Oberfläche der Glasmembran in Kontakt mit dem Messmedium oder der Messlösung und die innere Oberfläche ist in Kontakt mit einer Elektrolytlösung als Bezugslösung. Unter Austausch von Alkaliionen des Glases gegen Wasserstoffionen ($H^+$) Ionen bilden sich aussen auf der Glasmembran dünne gelartige Silikatquellschichten aus. Durch Unterschiede in den chemischen Potentialen der $H^+$- Ionen zwischen der Quellschicht und den angrenzenden Lösungen bauen sich auf beiden Seiten der Glasmembran Galvanispannungen infolge des Durchtritts von $H^+$-Ionen durch die Phasengrenze Lösung / Quellschicht auf. Die Summe dieser Galvanispannungen ergibt die Glaselektrodenspannung, die zwischen dem Messmedium und dem Elektrolyten mit zwei Bezugselektroden als innere und äussere Ableitung messbar ist.

Ionensensitive Glaselektroden, sowie Sensoren mit ionensensitiven Glaselektroden, zeigen zwar sehr gute Messeigenschaften z. B. pH-Elektroden in Bezug auf Steigung, Langzeitstabilität, Selektivität und Nachweisgrenze, haben jedoch auch Nachteile. Klassische Glaselektroden können nur in einer vorgegebenen Orientierung verwendet werden. Zudem sind Glaselektroden mechanisch unvorteilhaft, da sie leicht brechen oder abbrechen können und so zum Beispiel Glassplitter das Messmedium verunreinigen können.

Bisherige Versuche ionensensitive Festkontakt-Elektroden oder ionensensitive "Solid-State" Elektroden herzustellen verliefen wenig erfolgreich, da derartige Elektroden zur Messung der Ionenaktivität in der Regel eine schlechtere Leistung und/oder nur mit Einschränkungen, wie zum Beispiel in Bezug auf die Abdeckung des pH-Messbereichs oder die Druck- und/oder Temperaturbeständigkeit, verwendet werden können.

DE 196 20 568 A1 offenbart eine pH-Glaselektrode, welche eine zweischichtige Glasmembran umfasst, die innen mit Silber beschichtet ist und zudem mit einem elastischen Material verfüllt ist, um die mechanische Stabilität der Elektrode zu verbessern. Die zweischichtige Glasmembran besteht aus einer mediumsberührenden, ionenleitfähigen Glasschicht und einer innenliegenden, elektrisch- und ionenleitenden Glasschicht.

EP0382846 A1 offenbart eine Glaselektrode mit einem Glas-Schaft und einer an einem Ende des Schafts angeschweissten kalottenförmigen Membran aus einem ionenleitenden Alkaliglas. Auf die Innenfläche dieser ionensensitiven Membran ist ein Überzug aus einem Feststoff aufgetragen, der eine Legierung eines Alkali- und eines Nichtalkalimetalls darstellt, und durch einen Ableitdraht kontaktiert wird.

WO 01/04615 A1 offenbart eine ionensensitive Solid-State-Elektrode mit einer Glasmembran und einem metallischen Kern, welche zudem mit einem Stopfen aus elektrisch-leitendem Metall abgedichtet ist. Beispielhaft wird eine Elektrode mit einer Lithiumhaltigen-Glasmembran, einer Lithium-Blei-Legierung als metallischem Kern und einem Stopfen aus einer sogenannten Wood-Legierung beschrieben.

US 4,632,732 A offenbart eine ionensensitive pH-Elektrode mit einer Zwischenschicht zwischen der ionensensitiven Glasmembran und dem elektrischen Kontakt, welche Zwischenschicht über elektrisch-leitendes Silberepoxid kontaktiert wird. Die Zwischenschicht besteht aus Lithium-Vanadium-Oxid, welches durch Sintern fest mit der Glasmembran verbunden wird.

DE 197 14 474 C2 offenbart einen elektrochemischen Sensor, welcher in Dickfilmtechnik hergestellt wird. Auf ein Stahl-Keramik-Substrat wird in Siebdrucktechnik zuerst eine Metallelektrode aus Gold, Platin, einer Gold-Silber-Legierung oder einer Platin-Silber-Legierung und darauf mindestens eine Glas-Zusammensetzung als ionensensitive Glasmembran abgeschieden.

DE 100 18 750 C2 offenbart eine festkontaktierte ionensensitive Glaselektrode, bei welcher innen auf die Glasmembran eine polymere Kontaktschicht aufgebracht ist, welche ein intrinsisch leitfähiges organisches Polymer umfasst, das sowohl an der Glasmembran als auch an der Ableitung haftet.

US 4,133,735 A offenbart eine planare pH-Elektrode. Auf einem Forsterit-Wafer wird eine leitende Schicht in Dünnfilm- oder Dickfilm-Technik und auf zumindest einen Teil dieser leitenden Schicht eine Schicht pH-Glas in Dickfilm-Technik aufgebracht. Die leitende Schicht besteht aus Chrom, Nickel, Gold, Silber oder einer Gold-Platin-Mischung. Weiterhin kann eine Ableitung oder ein FET (Feldeffekttransistor) mit der leitenden Schicht verbunden werden. Damit die leitende Schicht nicht in Kontakt mit dem Messmedium tritt, wird die Elektrode unter Auslassung der Glasmembran gegen das Messmedium abgedichtet.

US 4,280,889 A offenbart eine mehrlagige Elek-

trode zur Messung der Ionenkonzentration, wobei auf ein isolierendes Substrat, wie Keramik oder Glas, eine elektrisch-leitende Struktur aus aufeinanderfolgenden Schichten aus Chrom und Silber aufgebracht wurde und diese mit einer festen Elektrolytschicht aus Silberchlorid und äusseren ionensensitiven Glasschicht, wie einem pH-Glas, überlagert wurde. Zumindest die Glasschicht wurde durch RF-Sputtern aufgebracht.

EP 0 420 983 A1 offenbart eine ionensensitive Festphasenelektrode mit einer ionensensitiven Glasmembran, deren Glas-Zusammensetzung Lanthan und Neodym enthält, und einem an der Glasmembran angebrachten Festphasenkontakt, einer Oxidverbindung der Formel $M_xLa_yNd_zWO_3$, wobei M ein Alkali- oder Erdalkalimetall ist und $0 < x + y + z < 1$ gilt. Der Festphasenkontakt ist wiederum mit einem Ableitungsdraht verbunden.

DE 37 27 485 A1 offenbart ein Festkörper-Ableitsystem zur Verwendung mit einem ionensensitiven Element für elektrochemische Sensoren, wobei ein mehrphasiges festes Kontaktmaterial zwischen einer elektrischen Ableitung und dem ionensensitive Element angeordnet ist. Zudem umfasst das Ableitsystem eine ionenleitende Zwischenschicht (z.B. $CsHSO_4$), welche den Innenwiderstand des Systems verringert. Als Kontaktmaterial wird ein mehrphasiges System, bestehend aus z.B. Lithium (Li) und Zinn (Sn) eingesetzt, welches aus einer Phase Zinn mit darin gelöstem Lithium und einer intermetallischen Phase (z.B. $Li_xSn_y$). Aufgrund der Löslichkeit von $Li_xSn_y$ in Sn soll die Aktivität des Lithiums im Zinn und damit auch das Potential des Ableitsystems stabilisiert werden. Allerdings ist die Lithium-Löslichkeit temperaturabhängig, so dass sich das thermodynamische Gleichgewicht in Abhängigkeit der Temperatur ändert. Daraus ergibt sich, beim Einsatz in einem elektrochemischen Sensor, eine verlängerte Einschwingzeit oder Drift bei Temperaturänderungen.

Eine der wenigen kommerziell genutzten Techniken für eine ionensensitive Festkörper-Elektrode stellt eine Emaille-pH-Elektrode dar, welche die Firma Pfaudler, Deutschland vertreibt. Diese ist jedoch nicht über den gesamten pH-Bereich einsetzbar und zudem teuer im Vergleich zu den herkömmlichen Glaselektroden.

Bislang ist es nicht gelungen eine ionensensitive Festkontakt-Elektrode zur Messung der Ionenaktivität zu entwickeln, welcher vergleichbare oder bessere Messeigenschaften als die bekannten ionensensitiven Glaselektroden aufweist. Insbesondere der leitfähige Übergang von der Messlösung über die Glasmembran und einen Festphasenelektrolyten zur Ableitung konnte bislang nicht dauerhaft und zufriedenstellend realisiert werden.

Gerade für die Anwendung in Prozessanlagen wäre es vorteilhaft ionensensitive Festkontakt-Elektroden für die Messung von Ionenaktivitäten zu entwickeln, die mechanisch stabil sind, lageunabhängig eingesetzt werden können und zumindest mit den bekannten Glaselektroden vergleichbare Messcharakteristiken aufweisen. Weiterhin erfordert der Einsatz einer ionensensitiven Festkontakt-Elektrode in einer Prozessanlage oder Prozessumgebung eine hohe Temperaturstabilität der eingesetzten Elektrode sowie eines darin enthaltenen Messelements, um Einflüsse von Temperaturschwankungen in einem Prozessmedium und/oder der Prozessumgebung auf die Bauteile und/oder ein resultierendes Messsignal zu minimieren.

Realisiert werden kann dies durch ein Messelement für eine ionensensitive Festkontakt-Elektrode zur Messung einer Ionenaktivität in einem Messmedium, umfassend eine ionensensitiven Schicht, welche im Betrieb mit einem Messmedium in Kontakt steht und für Lithium-Ionen leitend ist, und eine einphasige elektrisch-leitende Schicht, welche metallisches Lithium oder eine Lithium-(0)-Legierung umfasst. Das erfindungsgemässe Messelement ist ein Festkörper-Messelement und umfasst ferner eine Li-Ionen leitende Festkörper-Elektrolytschicht, welche zwischen der ionensensitiven Schicht und der elektrisch-leitenden Schicht angeordnet ist.

Das erfindungsgemässe Messelement ist ein Festkörperelement, welches sich insbesondere im Einsatz in einer Festkontakt-Elektrode zur Messung der Ionenaktivität in einem Messmedium als sehr robust sowie hysteresefrei und elektrochemisch reversibel erwiesen hat. Weiterhin ist es ist über einen grossen Temperaturbereich thermodynamisch stabil und zeigt auch bei Temperaturänderungen keine oder zumindest keine verlängerte Einschwingzeit.

Vorzugsweise umfasst die ionensensitive Schicht ein ionensensitives Glas, welches für Lithium-Ionen leitend ist. Derartige Gläser werden beispielsweise als Glasmembran von bekannten ionensensitiven Glaselektroden und insbesondere von pH-Glaselektroden eingesetzt.

Die elektrisch-leitende Schicht, die reines Lithium oder eine Lithium-(0)-Legierung umfasst, ist vorzugsweise eine einphasige feste Lösung, Festkörper-Verbindung oder Reinsubstanz und weist eine hohen Lithium Konzentration oder Aktivität auf. Reines Lithium wird hier auch als metallisches Lithium bezeichnet. Eine hohe Lithium-Aktivität ist erforderlich, um zu gewährleisten, dass die Lithium-Konzentration über die Lebensdauer oder den Einsatzzeitraum des Messelements als konstant angesehen werden kann und somit das Messelement eine gleichbleibende Messperformance aufweist. Vorteilhafterweise ist die elektrisch-leitende Schicht zudem homogen. Das erfindungsgemässe Messelement, welches mit Lithium hoher Aktivität umfasst, arbeitet nahe am Standardreduktionspotential von Lithium ($Li_{(solid)} \rightarrow Li^+$ = -3.04 V).

Die Verwendung von einphasigen Lithium-(0)-Legierungen ist besonders vorteilhaft, da diese insbesondere im Vergleich zu reinem Lithium mechanisch und physikalisch stabiler sind, was sowohl die Verarbeitung erleichtert und zudem die mechanische Stabilität des resultierenden Messelements stark verbessert. Beispiele für geeignete Lithium-(0)-Legierungen stellen einphasige Lithium-Magnesium-Legierungen oder Lithium-Kupfer-Legierungen dar. Aufgrund ihrer höheren Lithium Konzentration, sind insbesondere Lithium-reiche einphasige Lithium-Magnesium-Legierungen mit einer kubisch raumzentriert Kristallstruktur als elektrisch-leitende Schicht geeignet.

Die Festkörper-Elektrolytschicht umfasst bevorzugt eine der folgenden Li-Ionen leitenden kristallinen oder amorphen (glasartigen) Festkörperverbindungen oder Mischungen daraus: Lithium Borate, wie $B_2O_3$ - $Li_2O$, Lithium Borat-Sulfate (LiBSO), wie $B_2O_3$ - $0.8Li_2O$ - $0.8Li_2SO_4$, Lithium Borophosphate (LiOP), wie $\frac{1}{2}x\,Li_2O - BPO_4$, allgemein $Li_2O$ - $B_2O_3$ - $P_2O_5$, Lithium-Aluminate, wie $Li_5AlO_4$, Lithium-Borosilikate, wie $Li_2O$-$B_2O_3$-$SiO_2$, Lithium-Galliumoxide, wie $Li_5GaO_4$, Lithium-Germanate, wie $Li_{(4-3x)}Al_xGeO_4$, Lithium-Nitride, Lithium-Phosphate, wie $Li_{(1+x)}Ti_2Si_xP_{(3-x)}O_{12}$ oder $Li_{(1+x)}M_xTi_{(2-x)}(PO_4)_3$ mit M=Al, Ga, Fe, Sc, In, Lu, Y, La, Lithium-Phosphor-Oxynitride, wie $Li_3PO_{4-x}N_x$, Lithium-Silikat-Aluminate, wie $LiAlSi_2O_6$, $LiAlSiO_4$, $Li_9SiAlO_8$, Lithium-Silikate, wie $Li_2SiO_4$, $Li_4SiO_4$, $Li_2SiO_3$, $Li_2Si_2O_5$, Lithium-Silizium Phosphate, wie $Li_{3.6}Si_{0.6}P_{0.4}O_4$, Lithium-Silizium-Phosphor-Oxynitride, wie $Li_4SiO_{4-x}$-$Li_3PO_{4-y}N_{x+y}$, Lithium-Thiogermanate, $Li_2GeS_3$, $Li_4GeS_4$, $Li_6GeS_5$, Lithium-Titanate, wie $Li_2Zr_{(1-x)}Ti_xO_3$, Lithium-Vanadate, Lithium-Verbindungen, wie $Li_2S$-$SiS_2$-$Li_3PO_4$ oder $Li_7P_3S_{11}$, Lithium-Zinkoxide, wie $Li_6ZnO_4$, nitrierte Lithium-Borate (Li-B-O-N), wie $Li_{3.09}BO_{2.53}N_{0.52}$, Sulfide, wie $Li_2S$-$GeS_2$, und thio-Lithium-Germanium-Verbindungen, wie $Li_{10}GeP_2S_{12}$, $Li_{3.25}Ge_{0.25}P_{0.75}S_4$.

Für die Festkörper-Elektrolytschicht geeignete Materialien zeichnen sich insbesondere dadurch aus, dass diese bewegliche Lithium-Ionen enthalten, gegenüber elementarem Lithium stabil sind und elektrisch nicht-leitend sind. Vorzugsweise bildet das Material der Festkörper-Elektrolytschicht eine glasartige Matrix aus und kann durch Sputtering oder vergleichbare Verfahren abgeschieden werden. Derartige Materialien umfassen die oben genannten Phosphat-, Phosphid-, Oxid-, Borat-, Nitrid-, Sulifd- und Sulfat-Verbindungen sowie Mischungen daraus, welche Lithium zumindest anteilig als kationische Komponente enthalten. Diese Verbindungen können zur Verbesserung der Leitfähigkeit weiter modifiziert werden, z.B. durch den Einbau von Stickstoff.

Das für die Festkörper-Elektrolytschicht eingesetzte Material oder die Festkörper-verbindung ist leitend für Lithium-Ionen (Li⁺) sowie elektrisch isolierend. Zudem sollte das Material der Festkörper-Elektrolytschicht möglichst stabil gegenüber dem Material der elektrisch-leitenden Schicht sein, um eine Degeneration oder Zerstörung derselben zu verhindern oder zumindest stark zu reduzieren. Weiterhin dient die Festkörper-Elektrolytschicht dazu die ionensensitive Schicht von der elektrisch leitenden Schicht abzugrenzen und so eine Zerstörung oder Zersetzung der ionensensitiven Schicht aufgrund der hohen Lithium Aktivität der elektrisch-leitenden Schicht zu verhindern. Auf diese Weise werden nahezu alle konkurrierenden Grenzflächengleichgewichte an den Grenzflächen zwischen der ionensensitiven Schicht und der elektrisch-leitenden Schicht bzw. den Grenzflächen zur Festkörper-Elektrolytschicht ausgeschlossen, was in einer hohen Potentialstabilität und sehr guten Reproduzierbarkeit des Messelements resultiert.

In einer Ausgestaltung umfasst die Festkörper-Elektrolytschicht eine Lithium-Phosphor-Oxynitrid Verbindung (LiPON), wie $Li_3PO_{4-x}N_x$. Diese hat den Vorteil, dass sie neben ihren elektrochemischen Eigenschaften gut auf die ionensensitive Schicht aufgebracht werden kann und geeignete Leitfähigkeitseigenschaften aufweist. LiPON ist elektrisch isolierend und ionisch leitend. Zudem verhindert eine derartig ausgestalte Festkörper-Elektrolytschicht, dass das Material der elektrisch-leitenden Schicht aufgrund dessen hoher Lithium Aktivität, insbesondere bei der Verwendung von reinem Lithium, das Material der ionensensitiven Schicht angreift. Vorteilhafterweise weist die Grenzfläche zwischen der elektrisch-leitenden Schicht und der Festkörper-Elektrolytschicht eine hohe Austauschstromdichte auf.

Das Messelement kann ferner eine Schutzschicht umfassen, welche als Schutz gegen Umgebungseinflüsse auf der elektrisch-leitenden Schicht aufgebracht ist. Die Schutzschicht dient dazu, eine Reaktion zwischen beispielsweise Sauerstoff oder Feuchtigkeit aus der Umgebung und der elektrisch-leitenden Schicht zu verhindern. Eine derartige Schutzschicht ist insbesondere bei der Verwendung von reinem Lithium oder einer reaktiven Lithium-haltigen Verbindung als elektrisch-leitende Schicht vorteilhaft.

In einer Ausführungsform umfasst die Schutzschicht einen durchkontaktierten Glaswafer, welcher mindestens eine durchkontaktierte Kontaktstelle aufweist. Derartige durchkontaktierte Glaswafer (eng. through glas via wafer) werden von verschiedenen Firmen kommerziell vertrieben. Die Verwendung solcher durchkontaktierter Glaswafer ist vorteilhaft, da diese ein hermetisch dichtes und sehr planares Packaging-Material darstellen und zudem grosse Vorteile bei der Messelement Fertigung zeigen, insbesondere da diese sich mit Standardverfahren der MEMS- und Halbleiterfertigung bearbeiten lassen.

Die Schutzschicht kann zudem eine Barriereschicht aufweisen, welche zwischen dem durchkontaktierten Glaswafer und der ionensensitiven Schicht angeordnet ist. Die Barriereschicht dient dazu den durchkontaktierten Glaswafer chemisch von der elektrisch-leitenden Schicht zu entkoppeln, so das ungewünschte chemische Reaktionen zwischen den Materialien der elektrisch-leitenden Schicht und dem durchkontaktierten Glaswafer vermieden werden. Weiterhin wird durch die Barriereschicht eine definierte Haftung für den Wafer-Bonding-Prozess zur Anbindung des durchkontaktierten Glaswafers ermöglicht.

In einer weiteren Ausgestaltung ist die Schutzschicht als Diffusionsbarriere ausgestaltet.

Die Schutzschicht und/oder Barriereschicht umfasst eines oder mehrere der folgenden Materialien: Gläser oder glasartige Materialien, insbesondere oxidische Gläser oder, Lithium-Phosphor-Oxinitrid-Gläser, und/oder metallische oder keramische Materialien, welche elektronisch leitfähig sind und mit Lithium nicht legieren, sowie Mischungen daraus.

Glasartige Materialien sind beispielsweise Siliziumdioxid ($SiO_2$), Siliziumoxide ($SiO_x$), Siliziumnitrid ($Si_3N_4$), Siliziumnitride ($SiN_x$), Spin-on-Glas, Silikatglas, Phosphosilikatglas, Fluorophospatglas, Kalk-Soda Glas und/oder Borosilikatglas. Beispiele für metallische oder keramische mit Lithium nicht legierende elektronisch leitfähige Materialien stellen Chrom, Nickel, Eisen, Tantal, Zirkonium, Titan, Hafnium, deren Metallnitrid-, Metallborid-, Metallcarbid-, Metallcarbonitrid-Verbindungen sowie Mischmaterialien wie insbesondere Titan-Zirkonium-Nitrid oder verwandte Materialien dar.

Ferner umfasst das Messelement bevorzugt ein mechanisch stabiles Substrat. Dieses dient insbesondere dazu das fertige Messelement zu stabilisieren, um es dadurch insgesamt robuster zu machen.

Vorzugsweise weist das mechanisch stabile Substrat und das ionensensitive Glas vergleichbare Ausdehnungskoeffizienten auf. Auf diese Weise können Spannungen im Messelement aufgrund von Temperaturschwankungen in der Umgebung möglichst klein gehalten oder sogar verhindert werden.

Das mechanisch stabile Substrat umfasst vorzugsweise eines oder mehrere der folgenden Materialien: Metall, Stahl, Keramik, Glas, Glaskeramiken, Polymerverbindung und Faserverbundmaterial. Weitere mögliche Materialien stellen Keramiken wie beispielsweise Zirkoniumoxid, Nickel-Eisen-Legierungen und/oder Glas, welches für die Herstellung von Glasschäften der bekannten ionensensitiven Glaselektroden verwendet wird, dar.

In einer weiteren Ausgestaltung ist das mechanisch stabile Substrat eine Leiterplatte mit vorzugsweise angepasstem Ausdehnungskoeffizient. Diese Ausgestaltung ist vorteilhaft da in einer Leiterplatte beispielsweise Kontaktstellen zum Abgreifen des Sensorsignals ausgebildet werden können.

Wird eine Leiterplatte mit vorzugsweise angepasstem Ausdehnungskoeffizient in Verbindung mit einem durchkontaktieren Glaswafer als Schutzschicht eingesetzt, so kann die Leiterplatte mittels eines ACA-Klebers (ACA: anisotropically conductive adhesive) mit dem Glaswafer verbunden werden. Der ACA-Kleber wird beispielsweise als ACF-Tapes (ACF: anisotropically conductive film) bereitgestellt.

In einer weiteren Ausgestaltung umfasst das Messelement zudem einen Temperatursensor. Dieser ist beispielsweise in der Leiterplatte eingebettet, insbesondere in Form eines Gold / Platin-Mäanders, oder kann auf der Oberfläche der Leiterplatte angebracht sein, zum Beispiel als SMT-Bauteil (SMT: surface mount technology).

In einer weiteren Ausgestaltung umfasst das Messelement eine Passivierungsschicht, welche die Schutzschicht unter Auslassung eines Kontaktbereichs abdeckt, wobei die Passivierungsschicht zwischen der Schutzschicht und dem stabilen Substrat angeordnet ist.

Das erfindungsgemässe Messelement weist ferner bevorzugt einen elektrischen Kontakt zum Abgreifen des Messsignals auf, welcher an der Aussenfläche des mechanisch stabilen Substrats angeordnet oder in diesem ausgebildet ist.

Die Erfindung betrifft zudem eine ionensensitive Festkontakt-Elektrode zur Messung einer Ionenaktivität in einem Messmedium, mit einem erfindungsgemässen Messelement.

Weiterhin betrifft die Erfindung einen elektrochemischen Sensor zur Messung einer Ionenaktivität in einem Messmedium mit einer ionensensitiven Festkontakt-Elektrode mit einem erfindungsgemässen Messelement und einer Referenzelektrode.

Im Folgenden werden anhand der Figuren verschiedene Ausführungsbeispiele näher beschrieben, wobei gleiche Elemente mit gleichen oder ähnlichen Bezugszeichen versehen sind. Die Figuren zeigen:

Fig. 1      Stark schematisierte Darstellung eines elektrochemischen Sensors mit einer ionensensitiven Festkontakt-Elektrode, welche ein erfindungsgemässes Messelement umfasst;

Fig. 2      schematisierte Darstellung einer ionensensitiven Schichtstruktur im Schnitt;

Fig. 3      schematische Darstellung eines erfindungsgemässen Messelements mit einer ionensensitiven Schichtstruktur gemäss Fig. 2 im Schnitt;

Fig. 4      schematische Darstellung eines weiteren erfindungsgemässen Messelements mit einer ionensensitiven Schichtstruktur gemäss Fig. 2 im Schnitt;

Fig. 5      schematische Darstellung von zwei Baueinheiten des Messelements gemäss Fig. 4;

Fig. 6      schematische Darstellung eines weiteren erfindungsgemässen Messelements mit einer ionensensitiven Schichtstruktur gemäss Fig. 2 im Schnitt;

Fig.7A     typische Messsignale eines bekannten Glassensors gegenüber einer Ag/AgCl-Referenzelektrode bei 25°C;

Fig. 7B     Messsignale eines erfindungsgemässen Sensors gegenüber einer Ag/AgCl-Referenzelektrode bei 25°C.

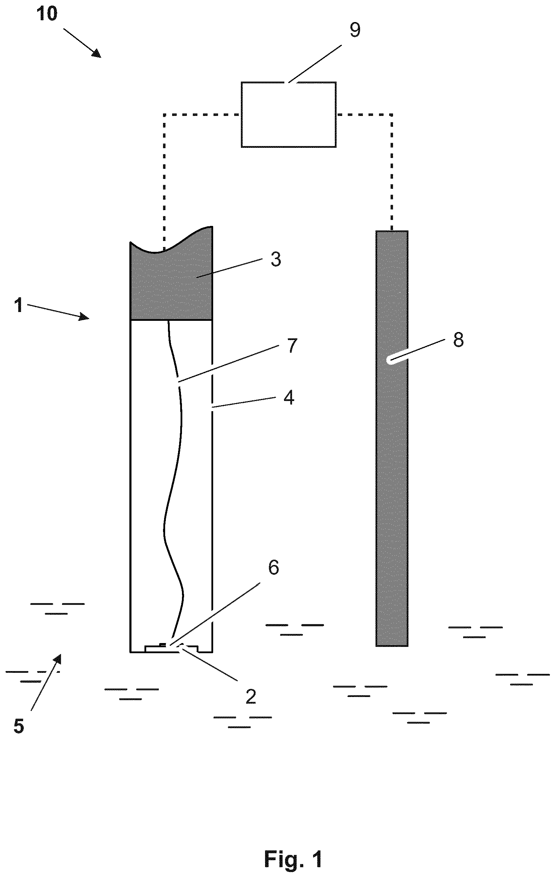

Figur 1 zeigt eine stark schematisierte Darstellung eines elektrochemischen Sensors 10 mit einer ionensensitiven Festkontakt-Elektrode 1, die ein erfindungsgemässes Messelement 2 umfasst, und einer Referenzelektrode 8. Die ionensensitive Festkontakt-Elektrode 1 umfasst einen Elektrodenkopf 3, welcher zumindest einen Teil der Messelektronik umfasst und über welchen die Elektrode an eine übergeordnete Anzeige und/oder Kontrolleinheit 9, beispielsweise einen Transmitter, angebunden ist. Diese Anbindung erfolgt entweder mittels eines Kabels oder kabellos, beispielsweise induktiv. Der Elektrodenkopf 3 ist mit einem Elektrodenkörper 4 verbunden in welchem das Messelement 2 so angeordnet ist, dass zumindest ein sensitiver Bereich mit einem Messmedium 5 in direktem Kontakt steht. Auf der dem Messmedium 5 abgewandten Oberfläche weist das Messelement 2 einen Kontakt 6 auf, beispielsweise einen Print. Zwischen diesem Kontakt 6 und dem Elektrodenkopf 3 ist eine Leitung 7 angeordnet, über die ein aufgenommenes Messsignal an den Elektrodenkopf 3 geleitet werden kann.

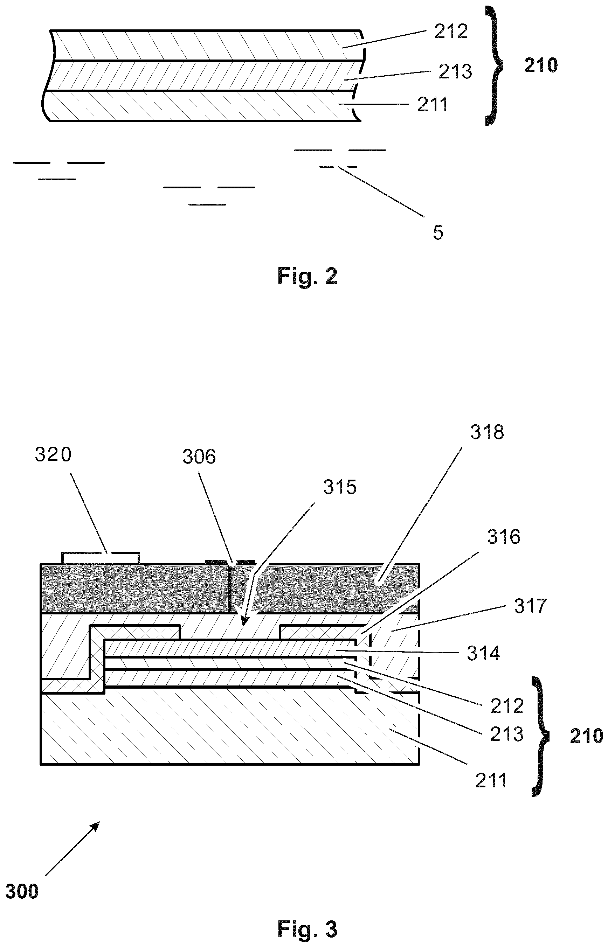

Figur 2 zeigt ebenfalls stark schematisiert eine ionensensitive Schichtstruktur 210 im Schnitt, welche ein elektrochemisches Festkörper-System als Teil eines erfindungsgemässen Messelements darstellt. Diese Schichtstruktur umfasst eine ionensensitive Glasschicht 211, eine elektrisch-leitende Schicht 212 und eine zwischen der Glasschicht 211 und der elektrisch-leitenden Schicht 212 angeordnete Festkörper-Elektrolytschicht 213.

Im Falle einer pH-Elektrode umfasst die Glasschicht 211 eine bekannte pH-sensitive Glaszusammensetzung, wie sie auch als Glasmembran für bekannte pH-Glassensoren eingesetzt wird. Die Glasschicht 211 wird vorzugsweise als Glaswafer bereitgestellt und weist eine Dicke zwischen ca. 0.05 mm und ca. 1 mm auf. In einer weiteren Ausgestaltung kann die Glasschicht 211 durch Sputtering oder andere bekannte Dünnschichtverfahren auf die Festkörper-Elektrolytschicht 213 aufgebracht werden. Während einer Messung steht zumindest ein sensitiver Bereich einer Oberfläche der Glasschicht 211 in direktem Kontakt mit dem Messmedium.

Auf die dem Messmedium abgewandte Oberfläche der Glasschicht 211 wird anschliessend eine Festkörper-Elektrolytschicht 213 aufgebracht. Geeignete Materialien für die Festkörper-Elektrolytschicht 213 stellen Lithium-Ionenleitende Festkörperverbindungen dar. Derartige Festkörper-Verbindungen sind beispielsweise Lithium Borate, wie $B_2O_3$ - $Li_2O$, Lithium Borat-Sulfate (LiBSO), wie $B_2O_3$ - $0.8Li_2O$ - $0.8Li_2SO_4$, Lithium Borophosphate (LiOP), wie $\frac{1}{2}$ x $Li_2O$-$BPO_4$, allgemein $Li_2O$ - $B_2O_3$ - $P_2O_5$, Lithium-Aluminate, wie $Li_5AlO_4$, Lithium-Borosilikate, wie $Li_2O$-$B_2O_3$-$SiO_2$, Lithium-Galliumoxide, wie $Li_5GaO_4$, Lithium-Germanate, wie $Li_{(4-3x)}Al_xGeO_4$, Lithium-Nitride, Lithium-Phosphate, wie $Li_{(1+x)}Ti_2Si_xP_{(3-x)}O_{12}$ oder $Li_{(1+x)}M_xTi_{(2-x)}(PO_4)_3$ mit M=Al, Ga, Fe, Sc, In, Lu, Y, La, Lithium-Phosphor-Oxynitride, wie $Li_3PO_{4-x}N_x$, Lithium-Silikat-Aluminate, wie $LiAlSi_2O_6$, $LiAlSiO_4$, $Li_9SiAlO_8$, Lithium-Silikate, wie $Li_2SiO_4$, $Li_4SiO_4$, $Li_2SiO_3$, $Li_2Si_2O_5$, Lithium-Silizium Phosphate, wie $Li_{3.6}Si_{0.6}P_{0.4}O_4$, Lithium-Silizium-Phosphor-Oxynitride, wie $Li_4SiO_{4-x}$-$Li_3PO_{4-y}N_{x+y}$, Lithium-Thiogermanate, $Li_2GeS_3$, $Li_4GeS_4$, $Li_6GeS_5$, Lithium-Titanate, wie $Li_2Zr_{(1-x)}Ti_xO_3$, Lithium-Vanadate, Lithium-Verbindungen, wie $Li_2S$-$SiS_2$-$Li_3PO_4$ oder $Li_7P_3S_{11}$, Lithium-Zinkoxide, wie $Li_6ZnO_4$, nitrierte Lithium-Borate (Li-B-O-N), wie $Li_{3.09}BO_{2.53}N_{0.52}$, Sulfide, wie $Li_2S$ - $GeS_2$, und thio-Lithium-Germanium-Verbindungen, wie $Li_{10}GeP_2S_{12}$, $Li_{3.25}Ge_{0.25}P_{0.75}S_4$, oder Mischungen daraus.

In einer Ausgestaltung umfasst die Festkörper-Elektrolytschicht 213 eine Alkalimetall-Festkörper-Elektrolyt-Verbindung und insbesondere eine Lithium-Phosphor-Oxid-Nitrid-Verbindung (LiPON), welche beispielsweise durch Sputtering aufgebracht wird. Weitere für die Aufbringung der Festkörper-Elektrolytschicht 213 geeignete Verfahren umfassen verschiedene Dünnschichtverfahren, unter anderen: Pulsed Laser Deposition, Magnetron Sputtering, reaktives Magnetron Sputtering, CVD, Bedampfen, Reaktivbedampfen, Sol-Gel-Verfahren, und plasmaunterstützte Beschichtungsverfahren, wie Plasmaunterstütztes CVD oder Vakuumplasmaspritzen. Die Festkörper-Elektrolytschicht 213 weist eine Schichtdicke zwischen ca. 50 nm und ca. 5000 nm auf, insbesondere Schichtdicken von ca. 100 nm bis ca. 1000 nm.

Anschliessend wird eine einphasige elektrisch-leitende Schicht 212 auf die Festkörper-Elektrolytschicht 213 aufgebracht, welche reines Lithium oder eine Lithium-(0)-haltige Legierung umfasst. Die Schichtdicke der elektrisch-leitenden Schicht 212 liegt zwischen ca. 10 nm und ca. 10 $\mu$m. Die einphasige elektrisch-leitende Schicht 212 ist vorzugsweise eine feste Lösung, Festkörper-Verbindung oder Reinsubstanz und weist eine hohe Lithium Konzentration oder Aktivität auf. Beispiele für geeignete Lithium-(O)-Legierungen stellen einphasige Lithium-Magnesium-Legierungen oder Lithium-Kupfer-Legierungen dar. Aufgrund ihrer höheren Lithium Konzentration, sind insbesondere Lithium-reiche einphasige Lithium-Magnesium-Legierungen mit einer kubisch raumzentriert Kristallstruktur als elektrisch-leitende Schicht geeignet. Die elektrisch-leitende Schicht ist zudem vorzugsweise homogen.

Das zugrunde liegende Messprinzip einer elektrochemischen Elektrode mit erfindungsgemässem Messelement beruht auf einer ionischen Reaktion des Messmediums mit der ionensensitiven Glasschicht 211. Die Festkörper-Elektrolytschicht 213 ist ebenfalls ionenleitfähig und ermöglicht zudem, dass an der Grenzfläche zwischen der Festkörper-Elektrolytschicht 213 und der elektrisch-leitenden Schicht 212 eine reversible Redoxreaktion zwischen ionischem und metallischem Lithiums (Li(0)) stattfindet, so dass ein Messsignal über einen geeigneten elektrischen Kontakt an der elektrisch-leitenden Schicht 212 abgegriffen werden kann.

Die in Figur 2 gezeigte Schichtstruktur 210 stellt somit das eigentliche elektrochemische Festkörper-Messsystem dar, welches sich in der Anwendung insbesondere als hysteresefrei und elektrochemisch voll reversibel herausgestellt hat. Zudem weist dieses System eine hohe Austauschstromdichte an der Grenzfläche zwischen der elektrisch-leitenden Schicht 212 und der Festkörper-Elektrolytschicht 213 auf und ist thermodynamisch, zumindest bei Temperaturen zwischen etwa -40°C und über +150°C stabil, welches einem für den Einsatz von pH-Sensoren typischen Temperaturbereich entspricht.

Figur 3 zeigt schematisch ein erfindungsgemässes Messelements 300 mit einer ionensensitiven Schichtstruktur 210 gemäss Figur 2 im Schnitt. Das Messelement 300 umfasst eine ionensensitive Glasschicht 211, welche beispielsweise ein dünner Glaswafer aus einem ionensensitiven Glas ist, insbesondere aus einem pH-sensitivem Glas. Auf diese Glasschicht 211 wird die Festkörper-Elektrolytschicht 213 und eine elektrisch-leitende Schicht 212 mit einem der oben angegebenen Verfahren aufgebracht. Je nach Ausgestaltung der elektrisch-leitenden Schicht 212 ist es notwendig, diese gegen Umgebungseinflüsse zu schützen. Metallisches oder reines Lithium ist beispielsweise äusserst reaktiv und wird bereits durch Sauerstoff oder Feuchtigkeit aus der Luft oxidiert, was bis zu einer Zerstörung des Messelements führen kann. Das hier gezeigte Messelement 300 weist daher eine Diffusionsbarriere als Schutzschicht 314 auf, welche die gesamte Oberfläche der elektrisch-leitenden Schicht 212 bedeckt. Die Diffusionsbarriere 314 kann einen oder mehrere der folgenden Werkstoffe oder Verbindungen umfassen: Gläser, glasartige Materialien wie Siliziumdioxid ($SiO_2$), Siliziumoxide ($SiO_x$), Siliziumnitrid ($Si_3N_4$), Siliziumnitride ($SiN_x$), Spin-on-Glas, Silikatglas, Phosphosilikatglas, Fluorophospatglas, Kalk-Soda Glas, Borosilikatglas oder oxidisches Gläser mit geeigneten Eigenschaften. Weiterhin möglich sind LIPON und verwandte Materialien, metallische sowie keramische Schichten aus mit Lithium nicht legierenden, elektronisch leitfähigen Materialien wie z.B. Chrom, Nickel, Eisen, Tantal, Zirkonium, Titan, Hafnium sowie deren Metallnitride, Metallboride, Metallcarbide, Metallcarbonitride, sowie Mischungen daraus, insbesondere Titanzirkoniumnitrid, oder verwandte Materialien.

Die Diffusionsbarriere 314 wird in diesem Ausführungsbeispiel mittels eines reaktiven Magnetron Sputter-Prozesses aufgebracht. Weiterhin kann die Diffusionsbarriere 314 durch eines der folgenden Verfahren aufgebracht werden: Laminationsverfahren, wasserfreies Sol-Gel Coating, Spincoating, Plasmaspritzen, Vakuumplasmaspritzen, Sputtering, CVD oder PVD Verfahren, wie beispielsweise Aufdampfen, Reaktivbedampfen, Ion Beam Assisted Deposition, Ion Plating oder Pulsed Laser Deposition.

Wie in Figur 3 zu erkennen ist, bedecken die Festkörper-Elektrolytschicht 213, die elektrisch-leitende Schicht 212 und die Diffusionsbarriere 314 nicht die gesamte Oberfläche der Glasschicht 211 und sind zudem mit Ausnahme eines Kontaktbereichs-Bereichs 315 von einer Passivierungsschicht 316 bedeckt. Die Passivierungsschicht 316 dient als weiterer Schutz der elektrisch-leitenden Schicht 212 und umfasst zum Beispiel eine oder mehrere der folgenden Verbindungen: Metall, insbesondere Stahl, Keramik, Glas, Glaskeramik, Polymerverbindung, Faserverbundmaterial oder Kombinationen daraus.

Die soweit aufgebaute Schichtstruktur wird mittels eines leitenden Klebstoffs 317 an ein mechanisch stabiles Substrat 318 gebondet. Das mechanisch stabile Substrat 318 umfasst beispielsweise eine oder mehrere der folgenden Verbindungen: Metall, insbesondere Stahl, Keramik, insbesondere Zirkoniumdioxid oder Nickel-Eisen-Legierungen, Glas, Glaskeramiken, Polymerverbindung, Faserverbundmaterial oder Leiterplatten, wobei das mechanisch-stabile Substrat 318 vorzugsweise einen mit der ionensensitiven Glasschicht 211 vergleichbaren Ausdehnungskoeffizienten aufweist. Die Ausdehnungskoeffizienten des Substrats 318 und der Glasschicht 211 weichen vorzugsweise nicht mehr als etwa 10 % von einander ab, um eine möglichst gute thermische Stabilität des Messelements zu gewährleisten.

Auf der Oberfläche des Substrats 318 ist ein Kontakt 306 ausgebildet oder befestigt, über welchen das Messsignal abgegriffen wird (s.a. Figur 1).

Weiterhin umfasst das Messelement einen Temperatur-Sensor 320, welcher wie hier gezeigt als SMT-Bauelement auf dem Substrat 318 befestigt ist.

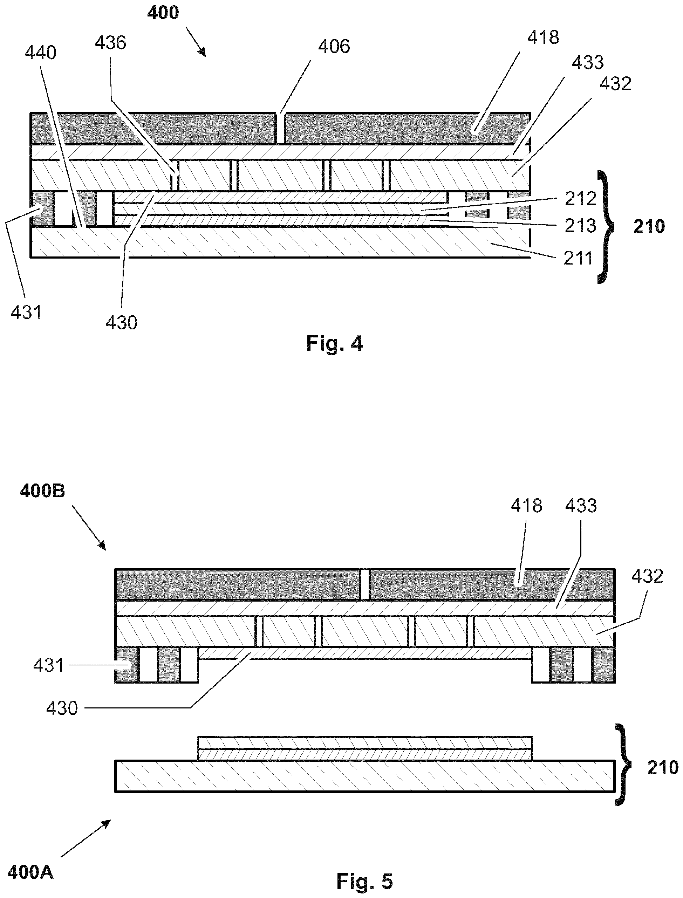

Figur 4 zeigt eine weitere Ausgestaltung eines erfindungsgemässen Messelements 400 mit einer Schichtstruktur 210. Die Schichtstruktur 210 umfasst eine ionensensitive Glasschicht 211, welche in dieser Ausgestaltung aus einem pH-sensitiven Glas besteht und ca. 200 $\mu$m dick ist. Die Glasschicht 211 ist bis auf eine umlaufende Randfläche 440 von ca. 200 $\mu$m bis ca. 1000 $\mu$m mit einer Festkörper-Elektrolytschicht 213 und diese wiederum vollständig mit einer elektrisch-leitendend Schicht 212 bedeckt. Die Festkörper-Elektrolytschicht 213 umfasst hier eine Lithium-Phosphor-Oxid-Nitrid-Verbindung in einer Dicke von ca. 1000 nm und die elektrisch-leitenden Schicht 212 reines, metallisches Lithium in einer Dicke von ca. 1000 nm. Die elektrisch-leitenden Schicht 212 ist vollständig von einer Barriereschicht als Schutzschicht 430 bedeckt, welche in diesem Ausführungsbeispiel auf einen durchkontaktierten Glaswafer 432 (eng.: through glass via wafer) appliziert wird. Diese Barriereschicht 430 dient zudem als Kontaktschicht zwischen der elektrisch-leitenden Schicht 212 und dem durchkontaktierten Glaswafer 432, welcher hier mehrere durchkontaktierte Kontaktstellen 436 umfasst. Durchkontaktierte Glaswafer sind von verschiedenen Anbietern kommerziell erhältlich ist. Der Glaswafer 432 ist über die Barriereschicht 430 und eine Bonding-Metallisierung 431, welche die umlaufende Randfläche 440 der ionensensitiven Glasschicht 211 kontaktiert, mit der Schichtstruktur 210 verbunden. Die Barriereschicht 430 und die Bonding-Metallisierung 431 umfassen vorzugsweise eines der folgenden Metalle oder diese enthaltenden Metallverbindungen: Titan, Chrom, Nickel, Gold, Platin. Auf dem Glaswafer 432 ist zudem eine Leiterplatte, auch PCB (PCB: Printed Circuit Board) genannt, als mechanisches stabiles Substrat 418 mittels einer Klebstoffschicht 433, hier ein ACA Kleber (ACA: anisotropically conductive adhesive), aufgebracht. Vorzugsweise handelt es sich bei der Leiterplatte um eine CTE matched PCB (CTE: coefficient of thermal expansion), bei welcher der thermische Expansionskoeffizient der Leiterplatte an den des ionensensitiven Glases 211 angepasst ist. Ein aufgrund der Interaktion eines Messmediums mit der ionensensitiven Glasmembran 211 entstehendes Messsignal kann durch einen hier nicht gezeigten Kontaktbereich (s. Figuren 1 und 3) abgegriffen werden.

Figur 5 zeigt das Messelement 400 gemäss Figur 4 in der Form von zwei Baugruppen umfasst und Baugruppe 400B das mechanisch stabile Substrat 418 mit der Barriereschicht 430, die Klebstoffschicht 433, den durchkontaktierten Glaswafer 432 und die Bonding-Metallisierung 431. Wie hier sehr schematisch gezeigt, werden die Baugruppen 400A und 400B im Wesentlichen unabhängig voneinander erzeugt und erst anschliessend miteinander gebondet. Dieses ist sehr vorteilhaft, da so insbesondere der Produktions-Ausschuss stark reduziert werden kann indem die gegen Umwelteinflüsse sensitivere Baugruppe 400A unabhängig von der Baugruppe 400B produziert wird.

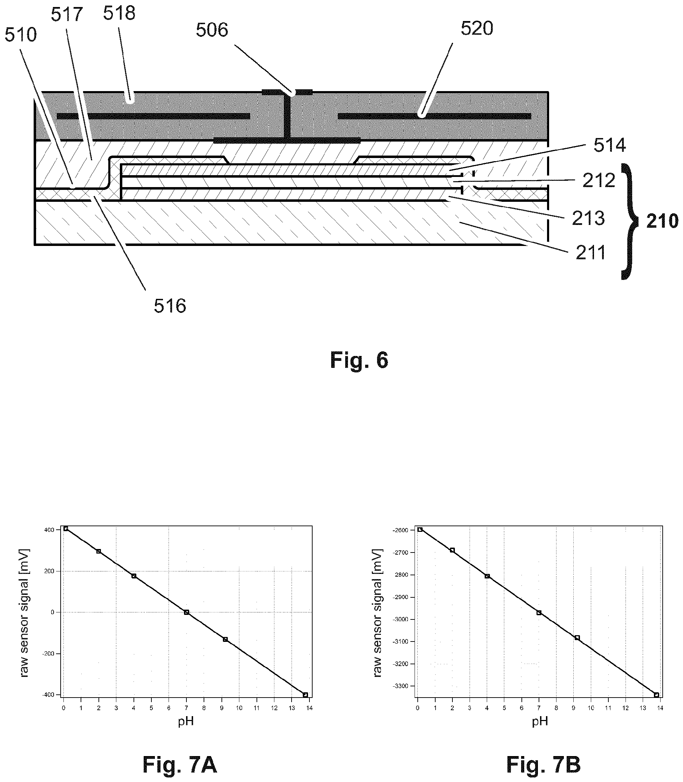

Figur 6 zeigt ein weiteres erfindungsgemässes Messelement 500 mit einer ionensensitiven Schichtstruktur 210, welches ähnlich wie das Messelement 300 (s. Figur 3) aufgebaut ist. Die elektrisch-leitende Schicht 212 ist von einer Diffusionsbarriere als Schutzschicht 514 bedeckt, welche wie auch der umlaufende Rand 540 der Glasschicht 211 unter Auslassung eines Kontaktbereichs 515 von einer Isolatorschicht 516 bedeckt ist. Als mechanisch-stabiles Substrat 518 ist hier eine Leiterplatte mit einem thermischen Expansionskoeffizienten CTE von ca. 10 ppm/K mittels eines ACF-Tapes (ACF: anisotropically conductive film) an die Isolatorschicht 516 gebondet. Im mechanisch-stabilen Substrat 518 ist zudem ein Kontakt 506 zum Abgreifen des Messsignals ausgebildet. Das Messelement 500 umfasst ferner einen Temperatursensor 520, welcher im Substrat 518 ausgebildet ist.

Figur 7 zeigt vergleichend die Rohdaten der typischen Messsignale (raw sensor signal) eines bekannten Glassensors und einer erfindungsgemässen ionensensitiven Festkontakt-Elektrode bei 25°C und unterschiedlichen pH-Werten. Die Messsignale wurden gegenüber einer Ag/AgCl-Referenzelektrode ermittelt, wobei Figur 7A die theoretischen Werte für einen bekannten Glassensor und Figur 7B die mit einer erfindungsgemässen ionensensitiven Festkontakt-Elektrode gemessenen Werte zeigt.

Figur 7B zeigt auf, dass sich das gemessene Potential einer erfindungsgemässen ionensensitiven Festkontakt-Elektrode linear gegenüber dem pH-Wert mit einer Nernst'schen Steigung verhält. Im Vergleich zum bekannten Glassensor, s. Figur 7A, zeigen die Messsignale der ionensensitiven Festkontakt-Elektrode, s. Figur 7B, eine etwas geringere Steilheit von 59.1 mV/pH-bei 25°C auf. Dieses ist vor allem auf die experimentellen Umstände zurückzuführen. Zudem weicht das Offsetpotential der ionensensitiven Festkontakt-Elektrode von dem eines Glassensors ab und liegt bei ca. -2980 mV im Vergleich zu ca. 0 mV bei einem bekannten Glassensor. Die Abweichung ist vor allem auf die Asymmetrie der ionensensitiven Festkontakt-Elektrode zurückzuführen.

### Liste der Bezugszeichen

| | |
|---|---|
| 1 | Elektrode |
| 2 | Messelement |
| 3 | Elektrodenkopf |
| 4 | Elektrodenkörper |
| 5 | Messmedium |
| 6, 306, 506 | Kontakt |
| 7 | Leitung |
| 8 | Referenzelektrode |
| 9 | Anzeige/Kontrolleinheit |
| 10 | Elektrochemischer Sensor |
| 210 | Schichtstruktur |
| 211 | Ionensensitive Schicht |
| 212 | Elektrisch-leitende Schicht |
| 213 | Festkörper-Elektrolytschicht |
| 300, 400 | Messelement |
| 314, 514 | Schutzschicht / Barriereschicht |
| 315, 515 | Kontaktbereich |
| 316, 516 | Passivierungsschicht |
| 317 | Klebstoffschicht |
| 318, 418, 518 | Substrat |
| 320, 520 | Temperatursensor |
| 430 | Barriereschicht / Schutzschicht |
| 431 | Bonding-Metallisierung |
| 432 | Glaswafer |
| 433 | Klebstoffschicht |
| 435 | Kontaktbereich |
| 436 | Kontaktstelle |
| 440, 540 | Randfläche |

### Patentansprüche

1. Messelement (2) für eine ionensensitive Festkontakt-Elektrode (1) zur Messung einer Ionenaktivität in einem Messmedium (5), wobei das Messelement (2) ein Festkörper-Messelement ist, umfassend eine ionensensitive Schicht (211), welche im Betrieb mit einem Messmedium (5) in Kontakt steht und für Lithium-Ionen leitend ist; und eine einphasige elektrisch-leitenden Schicht (212), welche metallisches Lithium, oder eine Lithium-(0)-Legierung umfasst; **dadurch gekennzeichnet, dass** das Messelement (2) ferner eine Li-Ionen leitende Festkörper-Elektrolytschicht (213) umfasst, die zwischen der ionensensitiven Schicht (211) und der elektrisch-leitenden Schicht (212) angeordnet ist.

2. Messelement nach Anspruch 1, **dadurch gekennzeichnet, dass** die ionensensitive Schicht (211) ein ionensensitives Glas umfasst, welches für Lithium-Ionen leitend ist.

3. Messelement nach Anspruch 1 oder 2, **dadurch gekennzeichnet, dass** die Lithium-(O)-Legierung der einphasigen elektrisch-leitenden Schicht eine einphasige Lithium-Magnesium-Legierung, eine Lithium-Kupfer-Legierung oder eine Mischung daraus ist.

4. Messelement nach Anspruch 3, **dadurch gekennzeichnet, dass** die Lithium-(0)-Legierung eine Lithium-reiche einphasige Lithium-Magnesium-Legierung mit einer kubisch raumzentrierten Kristallstruktur ist.

5. Messelement nach einem der Ansprüche 1 bis 4, **dadurch gekennzeichnet, dass** die Festkörper-Elektrolytschicht (213) eine der folgenden Li-Ionenleitenden Festkörperverbindungen oder Mischungen daraus umfasst: Lithium Borate, wie $B_2O_3$-$Li_2O$, Lithium Borat-Sulfate (LiBSO), wie $B_2O_3$ - $0.8Li_2O$ - $0.8Li_2SO_4$, Lithium Borophosphate (LiOP), wie

$$\frac{1}{2}\, x\, Li_2O\text{-}BPO_4,$$

allgemein $Li_2O$ - $B_2O_3$ - $P_2O_5$, Lithium-Aluminate, wie $Li_5AlO_4$, Lithium-Borosilikate, wie $Li_2O$-$B_2O_3$-$SiO_2$, Lithium-Galliumoxide, wie $Li_5GaO_4$, Lithium-Germanate, wie $Li_{(4-3x)}Al_xGeO_4$, Lithium-Nitride, Lithium-Phosphate, wie $Li_{(1+x)}Ti_2Si_xP_{(3-x)}O_{12}$ oder $Li_{(1+x)}M_xTi_{(2-x)}(PO_4)_3$ mit M=Al, Ga, Fe, Sc, In, Lu, Y, La, Lithium-Phosphor-Oxynitride, wie $Li_3PO_{4-x}N_x$, Lithium-Silikat-Aluminate, wie $LiAlSi_2O_6$, $LiAlSiO_4$, $Li_9SiAlO_8$, Lithium-Silikate, wie $Li_2SiO_4$, $Li_4SiO_4$, $Li_2SiO_3$, $Li_2Si_2O_5$, Lithium-Silizium Phosphate, wie $Li_{3.6}Si_{0.6}P_{0.4}O_4$, Lithium-Silizium-Phosphor-Oxynitride, wie $Li_4SiO_{4-x}$-$Li_3PO_{4-y}N_{x+y}$, Lithium-Thiogermanate, $Li_2GeS_3$, $Li_4GeS_4$, $Li_6GeS_5$, Lithium-Titanate, wie $Li_2Zr_{(1-x)}Ti_xO_3$, Lithium-Vanadate, Lithium-Verbindungen, wie $Li_2S$-$SiS_2$-$Li_3PO_4$ oder $Li_7P_3S_{11}$, Lithium-Zinkoxide, wie $Li_6ZnO_4$, nitrierte Lithium-Borate (Li-B-O-N), wie $Li_{3.09}BO_{2.53}N_{0.52}$, Sulfide, wie $Li_2S$-$GeS_2$, und thio-Lithium-Germanium-Verbindungen, wie $Li_{10}GeP_2S_{12}$, $Li_{3.25}Ge_{0.25}P_{0.75}S_4$.

6. Messelement nach Anspruch 5, **dadurch gekennzeichnet, dass** die Festkörper-Elektrolytschicht (213) eine Lithium-Phosphor-Oxynitrid-Verbindung, wie $Li_3PO_{4-x}N_x$, umfasst.

7. Messelement nach einem der Ansprüche 1 bis 6, **dadurch gekennzeichnet, dass** das Messelement (2) ferner eine Schutzschicht (314, 514) umfasst, welche als Schutz gegen Umgebungseinflüsse auf der elektrisch-leitenden Schicht aufgebracht ist.

8. Messelement nach Anspruch 7, **dadurch gekennzeichnet, dass** die Schutzschicht einen durchkontaktierten Glaswafer (432) umfasst, welcher mindestens eine durchkontaktierte Kontaktstelle (436) aufweist.

9. Messelement nach Anspruch 8, **dadurch gekennzeichnet, dass** die Schutzschicht ferner eine Barriereschicht (430) aufweist, welche zwischen dem durchkontaktierten Glaswafer (432) und der elektrisch-leitenden Schicht (212) angeordnet ist.

10. Messelement nach Anspruch 7, **dadurch gekennzeichnet, dass** die Schutzschicht (514) als Diffusionsbarriere ausgestaltet ist.

11. Messelement nach einem der Ansprüche 7 bis 10, **dadurch gekennzeichnet, dass** die Schutzschicht (314, 514) und/oder die Barriereschicht (430) eines der folgenden Materialien umfasst: Gläser, glasartige Materialien, oxidisches Glas, Lithiumphosphoroxynitrid-Verbindungen und/oder metallische oder keramische Materialien, welche elektronisch leitfähig sind und mit Lithium nicht legieren, sowie Mischungen daraus.

12. Messelement nach einem der Ansprüche 1 bis 11, **dadurch gekennzeichnet, dass** das Messelement (2) ferner ein mechanisch stabiles Substrat (318, 418, 518) umfasst, wobei das mechanisch stabile Substrat (318, 418, 518) und die ionensensitive Schicht (211) Ausdehnungskoeffizienten aufweisen, welche nicht mehr als 10 % voneinander abweichen, um eine möglichst gute thermische Stabilität des Messelements zu gewährleisten.

13. Messelement nach Anspruch 12, **dadurch gekennzeichnet, dass** das mechanisch stabile Substrat (318, 418, 518) eines oder mehrere der folgenden Materialien umfasst: Metall, Stahl, Keramik, Glas, Glaskeramiken, Polymerverbindung, Faserverbundmaterial.

14. Messelement nach Anspruch 12, **dadurch gekennzeichnet, dass** das mechanisch stabile Substrat (518) eine Leiterplatte ist.

**15.** Messelement nach einem der Ansprüche 1 bis 14, **dadurch gekennzeichnet, dass** dieses ferner einen Temperatursensor (320, 520) umfasst.

**16.** Messelement nach einem der Ansprüche 12 bis 15, **dadurch gekennzeichnet, dass** das Messelement (2) eine Passivierungsschicht (316, 516) umfasst, welche die Schutzschicht unter Auslassung eines Kontaktbereichs abdeckt, wobei die Passivierungsschicht (316, 516) zwischen der Schutzschicht (314, 514) und dem mechanisch stabilen Substrat (518) angeordnet ist.

**17.** Messelement nach einem der Ansprüche 12 bis 16, **dadurch gekennzeichnet, dass** das Messelement (2) einen elektrischen Kontakt (6, 306, 506) zum Abgreifen des Messsignals aufweist, welcher an der Aussenfläche des mechanisch stabilen Substrats (318, 418, 518) angeordnet oder in diesem ausgebildet ist.

**18.** Ionensensitive Festkontakt-Elektrode (1) zur Messung einer Ionenaktivität in einem Messmedium, mit einem Messelement (2) nach einem der vorangehenden Ansprüche.

**19.** Elektrochemischer Sensor zur Messung einer Ionenaktivität in einem Messmedium mit einer ionensensitiven Festkontakt-Elektrode (1) nach Anspruch 18 und einer Referenzelektrode (8).

## Claims

**1.** Measuring element (2) for an ion-sensitive solid contact electrode (1) for measuring an ion activity in a measurement medium (5), wherein the measuring element (2) is a solid-state measuring element, comprising an ion-sensitive layer (211), which is in contact with a measurement medium (5) in operation and is conductive for lithium ions; and a single-phase electrically conductive layer (212), which comprises metallic lithium or a lithium-(0) alloy; **characterized in that** the measuring element (2) further comprises a lithium-ion-conducting solid-state electrolyte layer (213), which is arranged between the ion-sensitive layer (211) and the electrically conductive layer (212).

**2.** Measuring element according to Claim 1, **characterized in that** the ion-sensitive layer (211) comprises an ion-sensitive glass, which is conductive for lithium ions.

**3.** Measuring element according to Claim 1 or 2, **characterized in that** the lithium-(0) alloy of the single-phase electrically conductive layer is a single-phase lithium-magnesium alloy, a lithium-copper alloy, or a mixture thereof.

**4.** Measuring element according to Claim 3, **characterized in that** the lithium-(0) alloy is a lithium-rich single-phase lithium-magnesium alloy having a body-centred cubic crystal structure.

**5.** Measuring element according to any one of Claims 1 to 4, **characterized in that** the solid-state electrolyte layer (213) comprises one of the following lithium-ion-conducting solid-state compounds or mixtures thereof: lithium borates, such as $B_2O_3$-$Li_2O$, lithium borate-sulfates (LiBSO), such as $B_2O_3$-$0.8Li_2O$-$0.8Li_2SO_4$, lithium borophosphates (LiOP), such as $\frac{1}{2}x$ $Li_2O$-$BPO_4$, generally $Li_2O$-$B_2O_3$-$P_2O_5$, lithium aluminates, such as $Li_5AlO_4$, lithium borosilicates, such as $Li_2O$-$B_2O_3$-$SiO_2$, lithium-gallium oxides, such as $Li_5GaO_4$, lithium germanates, such as $Li_{(4-3x)}Al_x GeO_4$, lithium nitrides, lithium phosphates, such as $Li_{(1+x)}Ti_2Si_xP_{(3-x)}O_{12}$ or $M_{(1+x)}M_x$-$Ti_{(2-x)}(PO_4)_3$ where M=Al, Ga, Fe, Sc, In, Lu, Y, La, lithium-phosphorus oxynitrides, such as $Li_3PO_{4-x}N_x$, lithium silicate-aluminates, such as $LiAlSi_2O_6$, $LiAlSiO_4$, $Li_9SiAlO_8$, lithium-silicates, such as $Li_2SiO_4$, $Li_4SiO_4$, $Li_2SiO_3$, $Li_2Si_2O_5$, lithium-silicon phosphates, such as $Li_{3.6}Si_{0.6}P_{0.4}O_4$, lithium-silicon-phosphorus oxynitrides, such as $Li_4SiO_{4-x}$-$Li_3PO_{4-y}N_{x+y}$, lithium thiogermanates, $Li_2GeS_3$, $Li_4GeS_4$, $Li_6GeS_5$, lithium titanates, such as $Li_2Zr_{(1-x)}Ti_xO_3$, lithium vanadates, lithium compounds, such as $Li_2S$-$SiS_2$-$Li_3PO_4$ or $Li_7P_3S_{11}$, lithium-zinc oxides, such as $Li_6ZnO_4$, nitrated lithium borates (Li-B-O-N), such as $Li_{3.09}BO_{2.53}N_{0.52}$, sulfides, such as $Li_2S$-$GeS_2$, and thio-lithium-germanium compounds, such as $Li_{10}GeP_2S_{12}$, $Li_{3.25}Ge_{0.25}P_{0.75}S_4$.

**6.** Measuring element according to Claim 5, **characterized in that** the solid-state electrolyte layer (213) comprises a lithium-phosphorus oxynitride compound, such as $Li_3PO_{4-x}N_x$.

**7.** Measuring element according to any one of Claims 1 to 6, **characterized in that** the measuring element (2) further comprises a protective layer (314, 514), which is applied to the electrically conductive layer as a protection against environmental influences.

**8.** Measuring element according to Claim 7, **characterized in that** the protective layer comprises a through-contacted glass wafer (432), which comprises at least one through-contacted contact point (436).

9. Measuring element according to Claim 8, **characterized in that** the protective layer further comprises a barrier layer (430), which is arranged between the through-contacted glass wafer (432) and the electrically conductive layer (212).

10. Measuring element according to Claim 7, **characterized in that** the protective layer (514) is designed as a diffusion barrier.

11. Measuring element according to any one of Claims 7 to 10, **characterized in that** the protective layer (314, 514) and/or the barrier layer (430) comprises one of the following materials: glasses, glass-type materials, oxidic glass, lithium-phosphorus oxynitride compounds, and/or metallic or ceramic materials which are electrically conductive and do not alloy with lithium, and also mixtures thereof.

12. Measuring element according to any one of Claims 1 to 11, **characterized in that** the measuring element (2) further comprises a mechanically stable substrate (318, 418, 518), wherein the mechanically stable substrate (318, 418, 518) and the ion-sensitive layer (211) have coefficients of expansion which do not differ from one another by more than 10%, in order to ensure the best possible thermal stability of the measuring element.

13. Measuring element according to Claim 12, **characterized in that** the mechanically stable substrate (318, 418, 518) comprises one or more of the following materials: metal, steel, ceramic, glass, glass ceramics, polymer compound, fibre composite material.

14. Measuring element according to Claim 12, **characterized in that** the mechanically stable substrate (518) is a circuit board.

15. Measuring element according to any one of Claims 1 to 14, **characterized in that** it further comprises a temperature sensor (320, 520).

16. Measuring element according to any one of Claims 12 to 15, **characterized in that** the measuring element (2) comprises a passivation layer (316, 516), which covers the protective layer while omitting a contact region, wherein the passivation layer (316, 516) is arranged between the protective layer (314, 514) and the mechanically stable substrate (518).

17. Measuring element according to any one of Claims 12 to 16, **characterized in that** the measuring element (2) comprises an electrical contact (6, 306, 506) for tapping the measurement signal, which is arranged on the outer surface of the mechanically stable substrate (318, 418, 518) or is formed therein.

18. Ion-sensitive solid contact electrode (1) for measuring an ion activity in a measurement medium, having a measuring element (2) according to any one of the preceding claims.

19. Electrochemical sensor for measuring an ion activity in a measurement medium having an ion-sensitive solid contact electrode (1) according to Claim 18 and a reference electrode (8).

**Revendications**

1. Élément de mesure (2) pour une électrode de contact fixe (1) sensible aux ions servant à mesurer une activité ionique dans un milieu de mesure (5), dans lequel l'élément de mesure (2) est un élément de mesure monolithique comprenant une couche sensible aux ions (211), laquelle est en contact en fonctionnement avec un milieu de mesure (5) et est conductrice d'ions lithium ; et une couche électriquement conductrice (212) monophasée, laquelle comprend du lithium métallique ou un alliage de lithium-(O) ; **caractérisé en ce que** l'élément de mesure (2) comprend en outre une couche d'électrolyte monolithique (213) conductrice d'ions Li, qui est disposée entre la couche sensible aux ions (211) et la couche électriquement conductrice (212).

2. Élément de mesure selon la revendication 1, **caractérisé en ce que** la couche sensible aux ions (211) comprend un verre sensible aux ions, lequel est conducteur d'ions lithium.

3. Élément de mesure selon la revendication 1 ou 2, **caractérisé en ce que** l'alliage de lithium-(0) de la couche électriquement conductrice monophasée est un alliage de lithium-magnésium monophasé, un alliage de lithium-cuivre ou un mélange à partir de ceux-ci.

4. Élément de mesure selon la revendication 3, **caractérisé en ce que** l'alliage de lithium-(O) est un alliage de lithium-magnésium monophasé riche en lithium avec une structure cristalline cubique centrée.

5. Élément de mesure selon l'une quelconque des revendications 1 à 4, **caractérisé en ce que** la couche d'électrolyte monolithique (213) comprend un des composés monolithiques conducteurs de ions Li suivants ou des mélanges à partir de ceux-ci : borate de lithium, tel que $B_2O_3$-$Li_2O$, borosulfate de lithium (LiBSO), tel que $B_2O_3$-$0{,}8Li_2O$-$0{,}8Li_2SO_4$, borophosphate de lithium (LiOP), tel que ½ x $Li_2O$-$BPO_4$, en général $Li_2O$-$B_2O_3$-$P_2O_5$, aluminate de lithium, tel que $Li_5AlO_4$, borosilicate de lithium, tel que $Li_2O$-$B_2O_3$-$SiO_2$, oxydes de gallium de lithium, tels que $Li_5GaO_4$, germanates de lithium, tels que

$Li_{(4-3x)}Al_xGeO_4$, nitrures de lithium, phosphates de lithium, tels que $Li_{(1+x)}Ti_2Si_xP_{(3-x)}O_{12}$ ou $Li_{(1+x)}M_x$-$Ti_{(2-x)}(PO_4)_3$ avec M = Al, Ga, Fe, Sc, In, Lu, Y, La, oxynitrures de phosphore de lithium, tels que $Li_3PO_{4-x}N_x$, aluminates de silicate lithium, tels que $LiAlSi_2O_6$, $LiAlSiO_4$, $Li_9SiAlO_8$, silicates de lithium, tels que $Li_2SiO_4$, $Li_4SiO_4$, $Li_2SiO_3$, $Li_2Si_2O_5$, phosphates de lithium-silicium, tels que $Li_{3,6}Si_{0,6}P_{0,4}O_4$, oxynitrures de lithium-silicium-phosphore, tels que $Li_4SiO_{4-x}$-$Li_3PO_{4-y}N_{x+y}$, thiogermanates de lithium, $Li_2GeS_3$, $Li_4GeS_4$, $Li_6GeS_5$, titanates de lithium, tels que $Li_2Zr_{(1-x)}Ti_xO_3$, vanadates de lithium, composés de lithium, tels que $Li_2S$-$SiS_2$-$Li_3PO_4$ ou $Li_7P_3S_{11}$, oxydes de zinc de lithium, tels que $Li_6ZnO_4$, borates de lithium nitrurés (Li-B-O-N), tels que $Li_{3,09}BO_{2,53}N_{0,52}$, sulfures, tels que $Li_2S$-$GeS_2$, et composés de thio-lithium-germanium, tels que $Li_{10}GeP_2S_{12}$, $Li_{3,25}Ge_{0,25}P_{0,75}S_4$.

6. Élément de mesure selon la revendication 5, **caractérisé en ce que** la couche d'électrolyte monolithique (213) comprend un composé d'oxynitrure de phosphore-lithium, tel que $Li_3PO_{4-x}N_x$.

7. Élément de mesure selon l'une quelconque des revendications 1 à 6, **caractérisé en ce que** l'élément de mesure (2) comprend en outre une couche de protection (314, 514), laquelle est appliquée sur la couche électriquement conductrice en tant que protection contre les influences extérieures.

8. Élément de mesure selon la revendication 7, **caractérisé en ce que** la couche de protection comprend une tranche de verre à trous métallisés (432), laquelle présente au moins un point de contact à trous métallisés (436).

9. Élément de mesure selon la revendication 8, **caractérisé en ce que** la couche de protection présente en outre une couche de barrière (430), laquelle est disposée entre la tranche de verre à trous métallisés (432) et la couche électriquement conductrice (212).

10. Élément de mesure selon la revendication 7, **caractérisé en ce que** la couche de protection (514) est configurée en tant que barrière de diffusion.

11. Élément de mesure selon l'une quelconque des revendications 7 à 10, **caractérisé en ce que** la couche de protection (314, 514) et/ou la couche de barrière (430) comprennent un des matériaux suivants : des verres, des matériaux de type verre, du verre oxydique, des composés d'oxynitrure de phosphore de lithium et/ou des matériaux métalliques ou céramiques, lesquels sont conducteurs électroniquement et ne sont pas alliés avec du lithium, ainsi que des mélanges à partir de ceux-ci.

12. Élément de mesure selon l'une quelconque des revendications 1 à 11, **caractérisé en ce que** l'élément de mesure (2) comprend en outre un substrat (318, 418, 518) mécaniquement stable, dans lequel le substrat (318, 418, 518) mécaniquement stable et la couche sensible aux ions (211) présentent des coefficients de dilatation, lesquels ne divergent pas l'un de l'autre de plus de 10 % afin de garantir une stabilité thermique de l'élément de mesure aussi satisfaisante que possible.

13. Élément de mesure selon la revendication 12, **caractérisé en ce que** le substrat (318, 418, 518) mécaniquement stable comprend un ou plusieurs des matériaux suivants : du métal, de l'acier, de la céramique, du verre, des vitrocéramiques, un composé polymère, un matériau composite à base de fibres.

14. Élément de mesure selon la revendication 12, **caractérisé en ce que** le substrat (518) mécaniquement stable est une carte à circuits imprimés.

15. Élément de mesure selon l'une quelconque des revendications 1 à 14, **caractérisé en ce que** celui-ci comprend en outre un capteur de température (320, 520).

16. Élément de mesure selon l'une quelconque des revendications 12 à 15, **caractérisé en ce que** l'élément de mesure (2) comprend une couche de passivation (316, 516), laquelle recouvre la couche de protection en laissant une zone de contact, dans lequel la couche de passivation (316, 516) est disposée entre la couche de protection (314, 514) et le substrat (518) mécaniquement stable.

17. Élément de mesure selon l'une quelconque des revendications 12 à 16, **caractérisé en ce que** l'élément de mesure (2) présente un contact électrique (6, 306, 506) servant à prélever le signal de mesure, lequel est disposé au niveau de la surface extérieure du substrat (318, 418, 518) mécaniquement stable ou est réalisé dans celui-ci.

18. Électrode de contact fixe (1) sensible aux ions servant à mesurer une activité ionique dans un milieu de mesure, avec un élément de mesure (2) selon l'une quelconque des revendications précédentes.

19. Capteur électrochimique servant à mesurer une activité ionique dans un milieu de mesure avec une électrique de contact fixe (1) sensible aux ions selon la revendication 18 et une électrode de référence (8).

**Fig. 1**

212
213
211

210

5

**Fig. 2**

320 306 318

315

316

317

314

212

213

211

210

**300**

**Fig. 3**

**400**

440 436 406 418 433 432

431 430

**Fig. 4**

212 213 211 } **210**

**400B**

418 433 432

431

430

**400A**

**Fig. 5**

**210**

**Fig. 6**

**Fig. 7A**

**Fig. 7B**

**IN DER BESCHREIBUNG AUFGEFÜHRTE DOKUMENTE**

**In der Beschreibung aufgeführte Patentdokumente**

- DE 19620568 A1
- EP 0382846 A1
- WO 0104615 A1
- US 4632732 A
- DE 19714474 C2
- DE 10018750 C2
- US 4133735 A
- US 4280889 A
- EP 0420983 A1
- DE 3727485 A1